Europäisches Patentamt

European Patent Office

Office européen des brevets

(11) Veröffentlichungsnummer: **0 382 006**
**A1**

(12) # EUROPÄISCHE PATENTANMELDUNG

(21) Anmeldenummer: **90101443.1**

(51) Int. Cl.5: **A01C 7/04**

(22) Anmeldetag: **25.01.90**

(30) Priorität: **06.02.89 DE 3903472**

(43) Veröffentlichungstag der Anmeldung:
**16.08.90 Patentblatt 90/33**

(84) Benannte Vertragsstaaten:
**BE DE ES FR GB IT NL**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Scheufler, Bernd, Dr.**
**Am Amazonenwerk 101**
**D-4507 Hasbergen(DE)**
Erfinder: **Kemper, Martin**
**Fontanestrasse 15**
**D-4506 Hagen am T.W.(DE)**
Erfinder: **Lührmann, Johannes**
**Bergstrasse 14**
**D-4512 Wallenhorst(DE)**

(54) **Kombinierte landwirtschaftliche Verteilmaschine.**

(57) Kombinierte landwirtschaftliche Verteilmaschine, bestehend aus einer Einzelkornsämaschine mit mehreren nebeneinander angeordneten Sägeräten, welche an einem Querbalken befestigt sind und einem Düngerstreuer mit mehreren Düngerablegereinrichtungen, wobei der Düngerstreuer ein oder mehrere Vorratsbehälter, welche innerhalb der Transportbreite angeordnet sind, und mehrere innerhalb der Transportbreite und zumindest eine außerhalb der Transportbreite angeordnete Düngerablegeeinrichtung aufweist, wobei die außerhalb der Transportbreite angeordneten Düngerablegeeinrichtungen über eine klappbare Vorrichtung zum Transport und/oder zur Reduzierung der Arbeitsbreite in eine Position innerhalb der Transportbreite gebracht werden können, wobei zwischen den Dosierorganen des Düngerstreuers und den Düngerablegevorrichtungen und/oder Düngerscharen jeweils zumindest eine ununterbrochene flexible Schlauchleitung angeordnet ist. Um eine einfache Düngerfördervorrichtung zu den Außenbereichen der Verteilmaschine zu schaffen, ist vorgesehene, daß zumindest in den zu den außerhalb der Transportbreite (T) angeordneten Dungerablegeeinrichtungen bzw. Düngersäscharen (10) führenden, ununterbrochenen Schlauchleitungen (18) eine mechanische Fördereinrichtung (19) angeordnet ist.

FIG 1

EP 0 382 006 A1

## Kombinierte landwirtschaftliche Verteilmaschine

Die Erfindung betrifft eine kombinierte landwirtschaftliche Verteilmaschine gemäß des Oberbegriffes des Patentanspruches 1.

Eine derartige Verteilmaschine ist durch das deutsche Gebrauchsmuster 88 08 574 bekannt. Bei dieser Verteilmaschine wird der auszubringende Dünger von den Dosierorganen zu den Düngeablegevorrichtungen oder Düngersäscharen durch eine ununterbrochene flexible Schlauchleitung mittels Druckluft geblasen. Um den Dünger zu den Düngersäscharen zu blasen, ist die Schlauchleitung an einem Druckluftgebläse oder an einem Druckluftanschluß eines Gebläses angeschlossen. Diese Lösung ist sehr kostenaufwendig, weil die an den kombinierten landwirtschaftlichen Verteilmaschinen an sich angeordneten Gebläsen für die Vereinzelung bei den Einzelkornsämaschinen eine zu geringe Leistung aufweisen, zusätzlich noch Förderluft abgeben zu können. Es müssen dann entweder zusätzliche Gebläse oder größere und somit teuere Gebläse verwendet werden.

Der Erfindung liegt die Aufgabe zugrunde, auf einfache und kostengünstige Weise eine einfache Düngerfördervorrichtung zu den in den Außenbereichen der Verteilmaschine angeordneten Düngeablegevorrichtung oder Düngerscharen zu schaffen.

Diese Aufgabe wird erfindungsgemäß durch die Maßnahmen gemäß des Kennzeichens des Patentanspruches 1 gelöst. Hierdurch wird eine sehr einfache und kostengünstige Fördervorrichtung geschaffen.

Durch das deutsche Gebrauchsmuster 87 06 974 ist bereits eine mechanische Fördervorrichtung für die Förderung des Düngers von den Dosierorganen zu den Düngersäscharen bekannt. Diese bekannte mechanische Fördervorrichtung ist jedoch nicht ununterbrochen zwischen den Dosierorganen und den Düngerablegeeinrichtungen angeordnet. Dieses ist von Nachteil, weil nicht immer sichergestellt ist, daß sich an der Unterbrechungsstelle der Fördervorrichtung beim Ausklappen der Düngeablegeeinrichtung in die Arbeitsstellung eine sichere Verbindung der Fördereinrichtung an der Trennstelle ergibt.

In einer einfachen Ausbildung der Erfindung ist erfindungsgemäß vorgesehen, daß die innerhalb der Schauchleitung angeordnete Fördereinrichtung als Förderschnecke oder Förderspirale ausgebildet ist. Hierdurch ergibt sich eine sehr kostengünstige Fördereinrichtung. Diese Fördereinrichtung kann über verschiedene Antriebe, wie sie beispielsweise in den Patentansprüchen 4,3,5 oder 6 beschrieben sind, angetrieben sein.

In vorteilhafter Weise ist der Antrieb der in der Schlauchleitung angeordneten Fördereinrichtung abschaltbar, damit beim Unterbrechen des Ausbringvorganges beispielsweise beim Wenden am Feldende oder bei der Reduzierung der Arbeitsbreite, wenn die Außenschare in Transportstellung gebracht werden, kein Dünger mehr aus der Schlauchleitung gefördert wird. Selbstverständlich muß dann auch die entsprechende Dosiervorrichtung abgeschaltet werden. In bevorzugter Weise ist vorgesehen, daß die äußere Düngerablegevorrichtung gegenüber dem Mittelteil der Maschine in Richtung der Maschinenmitte in eine Transportstellung versetzbar sind, und daß der Antrieb der in der Schlauchleitung angeordneten Fördereinrichtung bei sich in Transportstellung befindlicher Düngerablagevorrichtung vorzugsweise automatisch abgeschaltet ist. Gleichzeitig muß selbstverständlich auch die Düngerzudosierung in die entsprechende Schlauchleitung abgeschaltet werden.

Weitere Einzelheiten der Erfindung sind den übrigen Unteransprüchen, der Beispielsbeschreibung und den Zeichnungen zu entnehmen. Hierbei zeigen

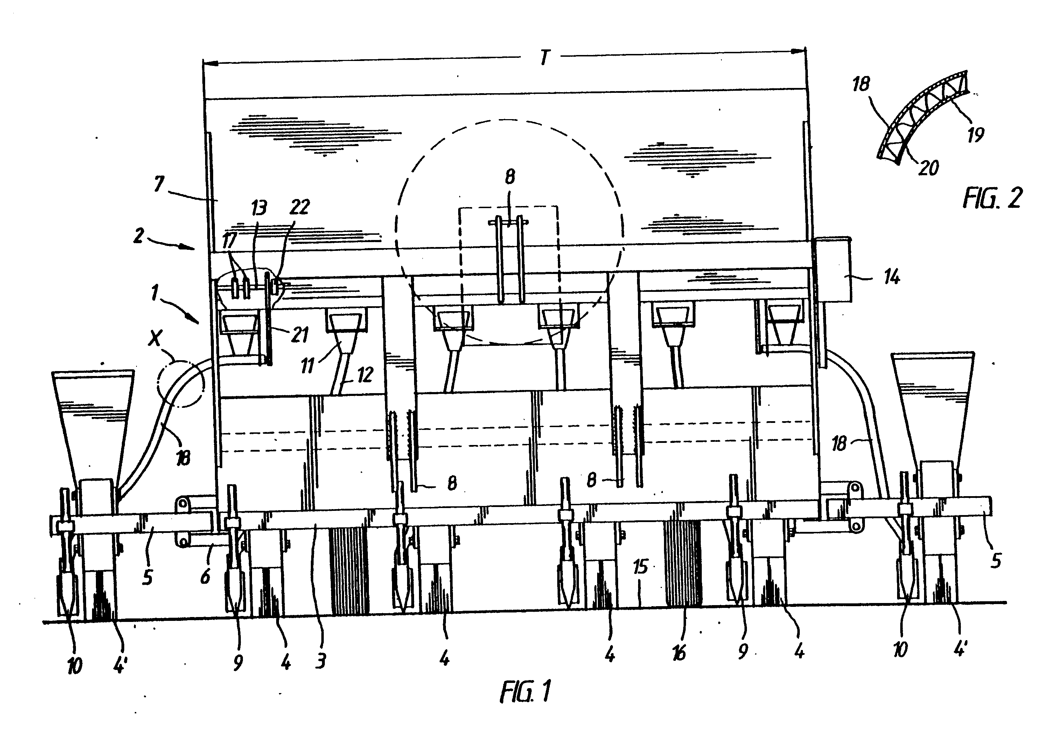

Fig. 1 eine erfindungsgemäß ausgebildete Verteilmaschine in der Ansicht von vorne und in Prinzipdarstellung und

Fig. 2 die Einzelheit X, d.h. ein Stück Schlauchleitung mit Fördereinrichtung im Schnitt und in schematischer Darstellungsweise.

Die kombinierte landwirtschaftliche Verteilmaschine besteht aus der Einzelkornsämaschine 1 und dem Düngerstreuer 2. Die Einzelkornsämaschine 1 weist die an dem Tragrahmen 3 an dem die Einzelkornsägeräte 4 angeordnet sind, auf. Die äußeren Sägeräte 4' sind an den schwenkbaren Teilen 5 des Tragrahmens 3 befestigt, welche über eine Schwenkvorrichtung 6 nach oben innerhalb des von dem Düngervorratsbehälter 7 begrenzten Bereichen in eine Transportstellung zur Reduzierung der Arbeitsbreite schwenkbar sind. An dem Tragrahmen 3 sind auf dessen Vorderseite die Dreipunktkupplungselemente 8 zum Anschluß der Verteilmaschine an den Dreipunktkraftheber eines Schleppers angeordnet. Der Düngervorratsbehälter 7 stützt sich an dem zentralen Rahmen 3 über zentrale Stützen ab. An dem Mittelteil des Tragrahmens 3 bzw. den Auslegern 5 sind die als Düngersäschare 9 bzw. 10 ausgebildeten Düngerablegevorrichtungen befestigt. Die Breite des Düngervorratsbehälters 7 bestimmt die Transportbreite T der Verteilmaschine.

Den innerhalb des von dem Düngervorratsbehälters 7 begrenzten Bereiches angeordneten Säschare 9 wird der Dünger aus dem Vorratsbehälter 7 über die zwischen den Düngersäscharen 9 und den Düngereinlauftrichtern 11 angeordneten Schlauchleitungen 12 mittels Schwerkraft zugeführt. An dem Vorratsbehälter 7 sind in dessen unteren Bereich Dosierorgane angeordnet, über welche der Dünger aus dem Vorratsbehälter 7 den Einlauftrichtern 11 zugeführt wird. Die Dosiervorrichtung weist eine Dosierwelle 13 auf, welche über ein einstellbares Getriebe 14 und einer nicht dargestellten Antriebsübertragung von den auf den Boden 15 abrollenden Laufrädern 16 angetrieben wird.

Zwischen den äußeren Säscharen 10, die an den Auslegern 5 außerhalb der Transportbreite T, die von der Breite des Düngerbehälters 7 bestimmt wird, angeordnet sind, und den Dosierorganen 17 ist die zu den Düngersäscharen 10 führende ununterbrochene Schlauchleitung 18 angeordnet. Innerhalb dieser Schlauchleitung 18 ist, wie Fig. 2 zeigt, die mechanische Fördereinrichtung 19 angeordnet. Diese mechanische Fördereinrichtung 19 ist als Förderschnecke bzw. Förderspirale 20 ausgebildet. Diese Förderspirale 20 wird über die Antriebsübertragung 21 von der Dosierwelle 13 angetrieben. Zwischen der Dosierwelle 13 und der Antriebsübertragungseinrichtung 21 ist das Kupplungselement 22 angeordnet. Über das Kupplungselement 22 ist der Antrieb zu der Fördereinrichtung 19 innerhalb der Schlauchleitung 18 abzuschalten. Diese Kupplung 22 wird dann betätigt, wenn der äußere Abschnitt 5 mit dem Einzelkornsägerät 4 und dem Düngersäschar 10 gegenüber dem Mittelteil der Verteilmaschine in Richtung der Maschinenmitte in eine Transportstellung versetzt wird. Somit wird der Antrieb für die in der Schlauchleitung 18 angeordneten Fördereinrichtung 19 bei sich in Transportstellung befindlicher Düngerablegeeinrichtung 10 automatisch abgeschaltet. Gleichzeitig wird die Düngerdosierung auch über die Kupplung 22 abgeschaltet, so daß die Düngerdosierorgane 17 stillgesetzt werden. Somit ist sichergestellt, daß bei sich in Transportstellung befindlichem Düngersäschar 10 kein Dünger mehr diesem Düngersäschar 10 zugeführt wird.

**Ansprüche**

1. Kombinierte landwirtschaftliche Verteilmaschine, bestehend aus einer Einzelkornsämaschine mit mehreren nebeneinander angeordneten Sägeräten, welche an einem Querbalken befestigt sind und einem Düngerstreuer mit mehreren Düngerablegereinrichtungen, wobei der Düngerstreuer ein oder mehrere Vorratsbehälter, welche innerhalb der Transportbreite angeordnet sind, und mehrere innerhalb der Transportbreite und zumindest eine außerhalb der Transportbreite angeordnete Düngerablegeeinrichtung aufweist, wobei die außerhalb der Transportbreite angeordneten Düngerablegeeinrichtungen über eine klappbare Vorrichtung zum Transport und/oder zur Reduzierung der Arbeitsbreite in eine Position innerhalb der Transportbreite gebracht werden können, wobei zwischen den Dosierorganen des Düngerstreuers und den Düngerablegevorrichtungen und/oder Düngerscharen jeweils zumindest eine ununterbrochene flexible Schlauchleitung angeordnet ist, dadurch gekennzeichnet, daß zumindest in den zu den außerhalb der Transportbreite (T) angeordneten Düngerablegeeinrichtungen bzw. Düngersäscharen (10) führenden, ununterbrochenen Schlauchleitungen (18) eine mechanische Fördereinrichtung (19) angeordnet ist.

2. Verteilmaschine nach Anspruch 1, dadurch gekennzeichnet, daß die innerhalb der Schlauchleitung (17) angeordnete Fördereinrichtung (19) als Förderschnecke oder Förderspirale (20) ausgebildet ist.

3. Verteilmaschine nach Anspruch 1 oder 2, dadurch gekennzeichnet, daß die Fördereinrichtung (19) über eine Antriebsvorrichtung (21) von einem auf dem Boden (15) abrollenden Rad (16) angetrieben ist.

4. Verteilmaschine nach einem oder mehreren der vorstehenden Ansprüche, dadurch gekennzeichnet, daß zwischen der Dosierwelle des Düngerbehälters und der Fördervorrichtung die Antriebsvorrichtung angeordnet ist.

5. Verteilmaschine nach einem oder mehreren der vorstehenden Ansprüche, dadurch gekennzeichnet, daß die Fördervorrichtung von einem Elektro- oder Hydraulikmotor angetrieben ist.

6. Verteilmaschine nach einem oder mehreren der vorstehenden Ansprüche, dadurch gekennzeichnet, daß die Fördervorrichtung über eine Antriebsvorrichtung von dem Antrieb des an der Einzelkornsämaschine angeordneten Gebläses angetrieben ist.

7. Verteilmaschine nach einem oder mehreren der vorstehenden Ansprüche, dadurch gekennzeichnet, daß der Antrieb der in der Schlauchleitung (18) angeordneten Fördereinrichtung (19) abschaltbar ist.

8. Verteilmaschine nach Anspruch 1 oder 7, dadurch gekennzeichnet, daß die äußere Düngerablegevorrichtung (10) gegenüber dem Mittelteil (3) der Maschine in Richtung der Maschinenmitte in eine Transportstellung versetzbar sind, daß der Antrieb der in der Schlauchleitung (18) angeordneten Fördereinrichtung (19) bei sich in Transportstellung befindlicher Düngerablegevorrichtung (10) vorzugsweise automatisch abschaltbar ist.

9. Verteilmaschine nach einem oder mehreren der vorstehenden Ansprüchen, dadurch gekennzeichnet, daß die Düngerdosierorgane 17 zu den äußeren Schlauchleitungen (18) über ein Schaltelement (22) bei sich in Transportstellung befindlicher Düngerablegevorrichtung (10) abschaltbar ist.

FIG. 2

FIG. 1

EP 0 382 006 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | DE-U-8808547 (BECKER) <br> * Seite 5, Zeile 90 - Seite 8, Zeile 8; Figuren 1-2 * <br><br> --- | 1 | A01C7/04 |
| Y | FR-A-2214226 (BECKER) <br> * Seite 3, Zeile 11 - Seite 6, Zeile 12; Figuren 1-3 * | 1 | |
| A | <br> --- | 2, 4 | |
| Y,P | EP-A-327907 (AMAZONEN-WERKE) <br> * Spalte 2, Zeile 33 - Spalte 3; Figur 1 * <br> --- | 1 | |
| Y | FR-A-2480067 (ENGRAIS SERVICE) <br> * Seite 4, Zeile 34 - Seite 7; Figuren 1-4c * <br> ----- | 1 | |

RECHERCHIERTE SACHGEBIETE (Int. Cl.5 )

A01C

Der vorliegende Recherchenbericht wurde für alle Patentansprüche erstellt

| Recherchenort | Abschlußdatum der Recherche | Prüfer |
|---|---|---|
| DEN HAAG | 23 MAI 1990 | VERMANDER R.H. |